# EUROPÄISCHE PATENTANMELDUNG

(11) **EP 3 525 327 A2**
(43) Veröffentlichungstag der Anmeldung: **14.08.2019**
(21) Anmeldenummer: 19150360.6
(22) Anmeldetag: 04.01.2019
(51) Int. Cl.: H02K 13/10

(54) **ANTRIEB MIT EINEM KOMMUTATORMOTOR**

(30) Priorität: 09.01.2018 DE 102018200195
(71) Anmelder: Bühler Motor GmbH, 90459 Nürnberg (DE)
(72) Erfinder: BERNREUTHER, Georg, 90449 Nürnberg (DE); Antes, Michael, 91358 Kunreuth (DE); Reinecker, Bernd, 90491 Nürnberg (DE)

(57) **Zusammenfassung**

Die Erfindung betrifft einen Antrieb (1) mit einem Kommutatormotor (2), mit einem Motorgehäuse (3), einem Lagerschild (4), Bürsten (5), welche über Litzenleiter (6) an eine Spannungsquelle anschließbar sind. Aufgabe der vorliegenden Erfindung ist es für einen Antrieb mit erhöhtem elektrischen Wirkungsgrad zu sorgen, bei dem eine optimale Körperschallentkopplung zwischen dem Kommutatormotor und dem Antriebsgehäuse realisierbar ist. Diese Aufgabe wird erfindungsgemäß durch die Merkmale des Anspruchs 1 gelöst.

## Beschreibung

Die Erfindung betrifft einen Antrieb (1) mit einem Kommutatormotor (2), mit einem Motorgehäuse (3), einem Lagerschild (4), Bürsten (5), welche über Litzenleiter (6) an eine Spannungsquelle anschließbar sind.

Antriebe dieser Art werden beispielhaft zum Antrieb von Rollos und Jalousien im Innenbereich von Gebäuden eingesetzt. Ein wesentliches Merkmal dieser Antriebe besteht darin, dass sie in der Regel ein erhebliches Selbsthemmmoment haben müssen, um im Motorstillstand einen ausreichenden Widerstand gegen die Schwerkraft des Rollos oder der Jalousie und damit gegen eine ungewollte Bewegung aufzuweisen. Elektromotoren für diesen Einsatzzweck werden dementsprechend so ausgelegt, dass sie ein hohes Nutrastmoment aufweisen. Nutrastmomente, auch als cogging torque bekannt, verursachen im Betrieb unangenehme Geräusche, die gerade beim Einsatz in geschlossenen Räumen als sehr störend empfunden werden. Als Abhilfemaßnahme können Nutrastmomentminimierte Motoren verwendet werden, die dann meist eine Bremse gegen die Schwerkraftwirkung benötigen. Diese Lösung ist unter wirtschaftlichen Gesichtspunkten häufig nicht vertretbar. Zur Unterdrückung der Motorgeräusche dienen regelmäßig Geräuschdämpfende Zwischenlagen zwischen dem Elektromotor und einem umgebenden Antriebsgehäuse. Um die entkoppelnde Wirkung auch bei den elektrischen Zuleitungen zum Elektromotor zu gewährleisten, können diese als flexible Leiter ausgeführt werden. In der Regel hat der Motor Anschlussfahnen oder Anschlussstecker, an denen ein Kabel durch Löten oder durch eine Steckverbindung angeschlossen ist. Durch mehrere hintereinander geschaltete Kontaktstellen und Verbindungsleitungen erhöht sich der elektrische Widerstand mit negativen Einfluss auf den Wirkungsgrad und den Energieverbrauch. Bei Akkubetriebenen Rolloantrieben ist der Energiespeicher meist so dimensioniert, dass er nur einmal jährlich gewechselt oder geladen werden muss. Bei einem ineffizienten Antrieb entlädt sich der Akku jedoch vorzeitig.

Um dies zu vermeiden ist es Aufgabe der vorliegenden Erfindung für einen Antrieb mit erhöhtem elektro-mechanischen Wirkungsgrad zu sorgen, bei dem eine optimale Körperschallentkopplung zwischen dem Kommutatormotor und dem Antriebsgehäuse realisierbar ist.

Diese Aufgabe wird erfindungsgemäß durch die Merkmale des Anspruchs 1 gelöst. Da zumindest ein Litzenleiter (6) eine unmittelbare elektrische Verbindung zwischen einer Bürste (5) und einem außerhalb des Motorgehäuses (3) angeordneten Anschlusskontakt (8) bildet, wird die Anzahl der Kontaktstellen minimiert und der Leitungswiderstand dadurch verringert. Ein weiterer Vorteil liegt darin, dass weniger Bauteile hergestellt und montiert werden müssen. Die Litzenleiter (6) bestehen aus einem Kupfergeflecht, sind sehr flexibel und übertragen nahezu keine Geräusche.

Gemäß einer Weiterbildung der Erfindung ist der Anschlusskontakt (8) auf einer Leiterplatte (7) angeordnet oder er wird durch eine Leiterbahn auf der Leiterplatte (7) gebildet. In diesem Fall ist eine Lötverbindung sinnvoll. Hierdurch verringert sich die Anzahl der Bauteile und Kontaktstellen nochmal.

Es ist zweckmäßig, dass nicht nur eine, sondern dass zumindest zwei Bürsten (5) über jeweils einen Litzenleiter (6) unmittelbar mit der Leiterplatte (7) oder einem Anschlusskontakt (8) auf der Leiterplatte (7) elektrisch verbunden sind. Sollten mehr als zwei Bürsten vorhanden sein ist vorgesehen, dass alle Bürsten mit einem Litzenleiter unmittelbar mit einem Anschlusskontakt (8) außerhalb des Kommutatormotors elektrisch verbunden ist. Nur auf diese Weise kann eine optimale Entkopplung erreicht werden.

Eine besonders vorteilhafte Ausführungsform der Erfindung ist dadurch gegeben, dass die Bürste (5) eine Kohlebürste ist und der Litzenleiter (6) in der Bürste (5) eingebettet ist. Kohlebürsten werden in der Regel aus der Pulverform gepresst. Es ist auch üblich Litzenleiter vor dem Pressvorgang in das Pulvermaterial einzulegen und dann mit einzupressen. Hierdurch ist neben einer sehr guten elektrischen auch eine sehr gute mechanische Verbindung herstellbar.

In Weiterbildung der Erfindung ist vorgesehen, dass der Anschlusskontakt (8) ein Schneidklemmkontakt ist. Dadurch lässt sich der Litzenleiter sehr schnell und sicher mit der Leiterplatte verbinden.

Um den Anschlusskontakt einfach mit der Leiterplatte zu verbinden, ist ein Einpresskontaktabschnitt vorgesehen, der in eine Bohrung der Leiterplatte eingepresst ist. Die Bohrung ist metallisiert, um einen elektrischen Kontakt mit dem Einpresskontaktabschnitt herzustellen.

In einer Variante ist vorgesehen, dass zumindest ein Litzenleiter (6) direkt mit der Leiterplatte (7) verschweißt ist.

Bei einer weiteren Variante ist zumindest ein Litzenleiter (6) durch eine Crimpverbindung mit der Leiterplatte (7) kontaktiert, wobei der Litzenleiter mit dem Anschlusskontakt (8) vercrimpt ist.

Schließlich ist es auch denkbar, dass der Anschlusskontakt ein Microquadlock-Stecker oder ein ähnlicher handelsüblicher Kontakt ist, der mit dem Litzenleiter (6) vercrimpt oder verschweißt ist.

Um Kurzschlüsse zwischen zwei Litzenleitern zu vermeiden ist der Lagerschild mit jeweils einer Durchführung für jeden Litzenleiter versehen. Die Durchführung und damit der Litzenabgang sind dabei axial, diagonal oder radial ausgerichtet. Bevorzugt wird hier eine radiale Ausrichtung.

Aus dem gleichen Grund ist der Lagerschild aus einem isolierenden Material hergestellt, vorzugsweise einem Kunststoffmaterial. Bei geeigneter Verlegung der Litzenleiter kann auf eine Isolierung derselben verzichtet werden. Falls eine Isolierung benötigt wird, kann ein Litzenleiter oder beide Litzenleiter mit einem Isolierschlauch versehen werden, der auch lose aufgesteckt sein kann.

Gemäß einer besonders bevorzugten Weiterentwicklung der Erfindung ist vorgesehen die Bürsten von außen radial zu montieren. Hierdurch wird vermieden, dass die Litzenleiter durch die Durchführung gefädelt werden muss.

Damit bei sich abnutzender Bürste den Litzenleitern zu ermöglichen, den nachrückenden Bürsten zu folgen, sind die Durchführungen (9) schlitzartig ausgeführt.

Der Einfachheit halber ist der Lagerschild als Bürstentragplatte ausgebildet, wobei auch die Bürstenführungen aus dem elektrisch isolierenden Material des Lagerschilds bestehen.

Es ist vorteilhaft, wenn sich die Durchführung (9) bis zu einem Bürstenschacht (17) zur Aufnahme und Führung der Bürste (5) erstreckt.

Weiter ist vorgesehen, dass sich die Durchführung (9) auf der gegenüberliegenden Seite des Bürstenschachts (17) als Federaufnahmetasche (22) fortsetzt. Darin lässt sich ein Schenkel einer Bürstenandruckfeder aufnehmen, der vorgespannt und bis zur Montage der Bürste verriegelt werden kann.

Aus Gründen der Bauraumoptimierung ist die Leiterplatte (7) parallel zu einer Motorachse angeordnet. Die Motorachse ist in diesem Sinne die Drehachse eines im Lagerschild gelagerten Rotors gemeint.

Um eine möglichst funktionale Anordnung der Litzenleiter 6 zu erreichen wird vorgeschlagen, dass die Bürsten parallel zur Leiterplatte (7) ausgerichtet und geführt sind und sich bei Abnutzung parallel zur Leiterplatte (7) bewegen, dadurch können sich die Litzenleiter optimal in der schlitzartigen Durchführung beiderseits der Leiterplatte (7) bewegen und die Leitungslängen beider Litzenleiter sind gleich.

Es ist vorgesehen, dass die Anschlusskontakte (8) auf der dem Motor abgewandten Seite der Leiterplatte (7) angeordnet sind. Deshalb ist es zweckmäßig die Litzenleiter um Kanten der Leiterplatte (7) herumzulegen. Die Länge der Kohlelitzen ist dabei so bemessen, dass eine leichte Schlaufe entsteht und eine Zugbelastung verhindert wird.

Der erfindungsgemäße Antrieb wird bevorzugt als Rollo- oder Jalousieantrieb eingesetzt - insbesondere Innenantriebe mit Akkumulatorbetrieb.

Ein Ausführungsbeispiel der Erfindung wird nachfolgend anhand der Zeichnung näher erläutert. Es zeigen:
Fig. 1 einen Kommutatormotor gemäß dem Stand der Technik,
Fig. 2 einen an einer Leiterplatte angeschlossenen Kommutatormotor gemäß Stand der Technik,
Fig. 3 eine Darstellung zweier Litzenleiter mit ihren Anschlüssen,
Fig. 4 eine Darstellung gemäß Fig. 3 mit Lagerschild,
Fig. 5 eine Schnittdarstellung des Lagerschilds,
Fig. 6 eine Innenansicht des Lagerschilds und
Fig. 7 eine Teildarstellung eines Antriebs mit Elektromotor und Leiterplatte.

Hinweis: Bezugszeichen mit Index und entsprechende Bezugszeichen ohne Index bezeichnen namensgleiche Einzelheiten in den Zeichnungen und der Zeichnungsbeschreibung. Es handelt sich dabei um die Verwendung in einer anderen Ausführungsform, dem Stand der Technik und/oder die Einzelheit ist eine Variante. Die Ansprüche, die Beschreibungseinleitung, die Bezugszeichenliste und die Zusammenfassung enthalten der Einfachheit halber nur Bezugszeichen ohne Index.

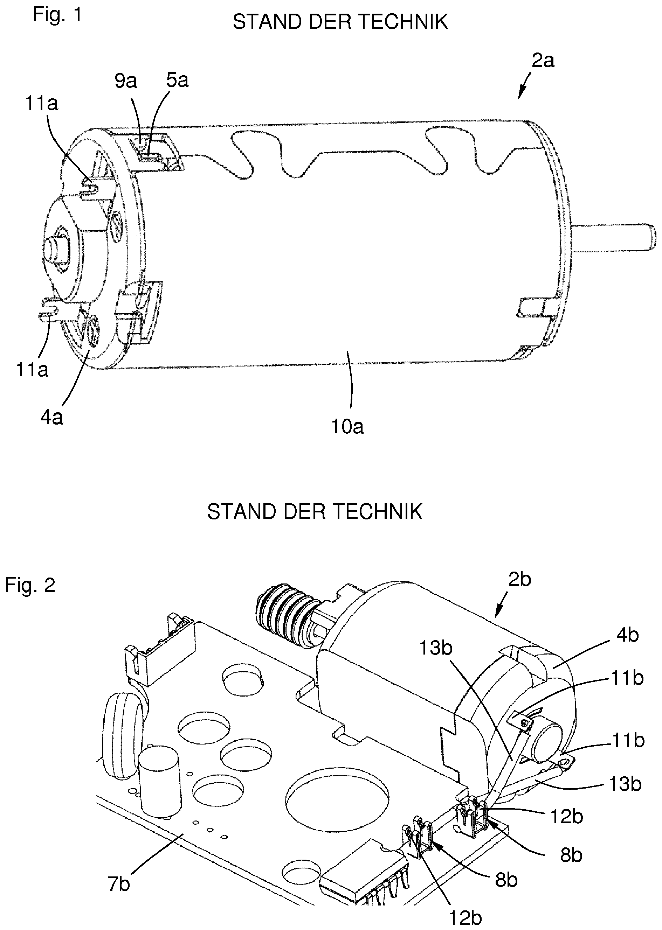

Fig. 1 zeigt einen Kommutatormotor 2a gemäß dem Stand der Technik, mit einem Motorgehäuse 10a, einem Lagerschild 4a und Anschlussfahnen 11a. An den Anschlussfahnen können Leitermittel angelötet, geschweißt oder aufgesteckt werden. Es sind Durchführungen 9a vorhanden, durch welche Bürsten 5a radial montiert werden können.

Fig. 2 zeigt einen Kommutatormotor 2b, welcher an einer Leiterplatte 7b angeschlossenen ist. Auf der Leiterplatte 7b sind Anschlusskontakte 8b eingepresst, welche Schneidklemmabschnitte 12b aufweisen. Flexible Motoranschlussleitungen 13b sind in die Schneidklemmabschnitte 12b eingelegt und mit diesen elektrisch kontaktiert. Die flexiblen Motoranschlussleitungen dämpfen zwar Schwingungen des Kommutatormotors, aber die hohe Anzahl der Kontakte (Bürste-Anschlussfahne, Anschlussfahne-Motoranschlussleitung, Motoranschlussleitung-Anschlusskontakt, Anschlusskontakt-Leiterplatte etc.) erhöhen den elektrischen Widerstand und verringern den elektrischen Wirkungsgrad.

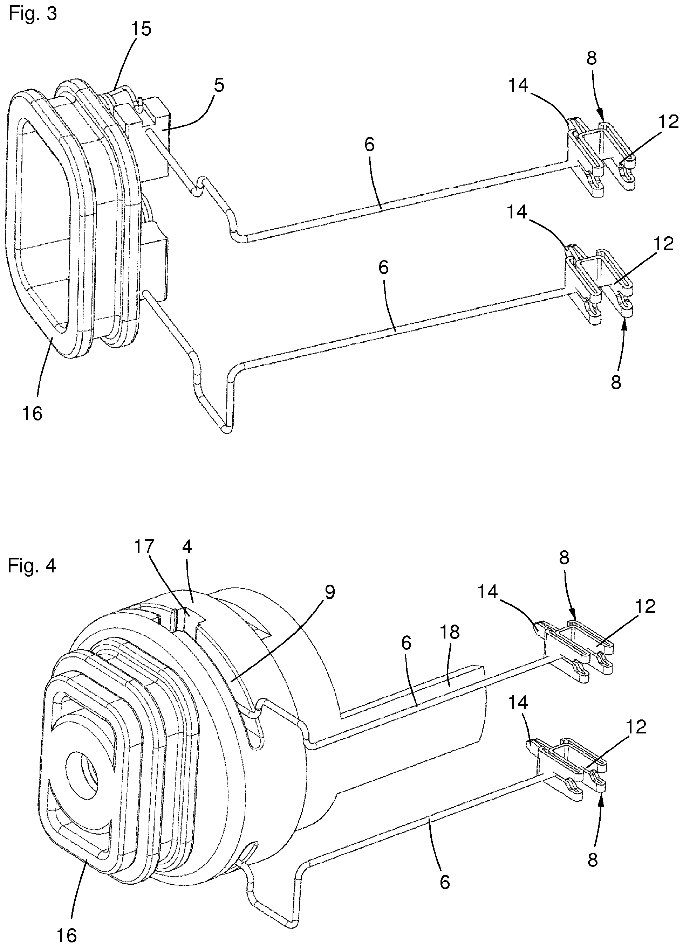

Fig. 3 zeigt eine Darstellung zweier Litzenleiter 6 mit ihren Anschlüssen. Auf der einen Seite sind die Litzenleiter 6 in Bürsten 5 eingebettet. Die Einbettung erfolgt dabei durch Einlegen der Litzenleiter 6 in ein Kohlepulvermaterial und Verpressen des Materials. Dabei entsteht eine feste elektrische und mechanische Verbindung zwischen dem Litzenleiter 6 und der Bürste 5. Auf der anderen Seite sind die Litzenleiter 6 jeweils in einen Schneidklemmabschnitt 12 eines Anschlusskontakts 8 eingelegt und elektrisch mit diesem verbunden. Auf der dem Schneidklemmabschnitt 12 abgewandten Seite des Anschlusskontakts 8 sind Einpressabschnitte 14 vorgesehen, die zum Einpressen in eine Leiterplatte dienen, wobei ein elektrischer Kontakt hergestellt wird. Weiter ist eine Bürstenandruckfeder 15 in Form einer Schenkelfeder, welche die Bürste 5 radial nach innen drückt und ein Dämpfungselement 16 dargestellt. Die beschriebenen Bauteile sind lagerichtig angeordnet. Der Übersichtlichkeit halber sind der Lagerschild, der Kommutatormotor und die Leiterplatte weggelassen.

Fig. 4 zeigt eine Darstellung gemäß Fig. 3 mit Lagerschild 4, welches zusätzlich zu den Litzenleitern 6, den Anschlusskontakten 8 und dem Dämpfungselement 16 dargestellt ist. Der Lagerschild 4 weist Durchführungen 9 für die Litzenleiter 6 auf, wobei die Durchführungen 9 schlitzartig ausgeführt ist, um den Litzenleitern 6 ausreichenden Bewegungsspielraum für das Nachführen zu den sich abnützenden Bürsten zu geben. Die Durchführungen 9 sind im Bereich der Bürsten axial erweitert und bilden damit Bürstenschächte 17, in welchen die Bürsten radial beweglich geführt sind. Der Lagerschild 4 weist einen Verdrehsicherungsabschnitt 18 auf, welcher in bekannter Weise zwischen zwei Magnetschalen eines Stators einfügbar ist.

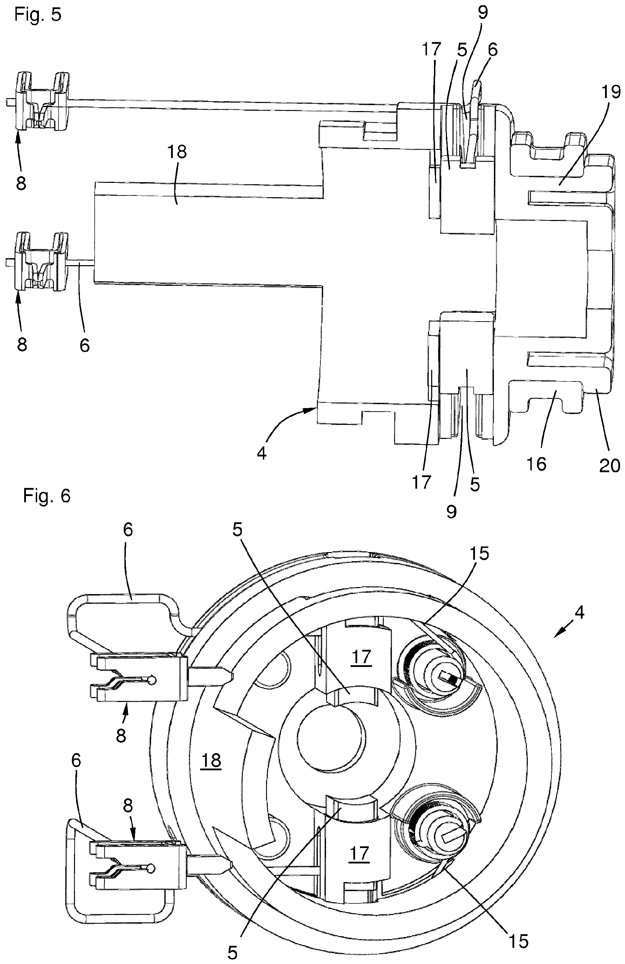

Fig. 5 zeigt eine Schnittdarstellung des Lagerschilds 4, mit den Bürstenschächten 17, den Bürsten 5, den Litzenleitern 6, den Anschlusskontakten 8, den Durchführungen 9, der Verdrehsicherung 18 und dem Dämpfungselement 16, welches in einem ringförmigen Ansatz 19 aufgenommen ist. Das Dämpfungselement 16 ist axial durch eine ringförmige Erweiterung 20 in seiner Lage gesichert.

Fig. 6 zeigt eine Innenansicht des Lagerschilds 4, mit den Bürstenschächten 17, der Verdrehsicherung 18, den Bürsten 5, den Bürstenandruckfedern 15, den Litzenleitern 6 und den Anschlusskontakten 8.

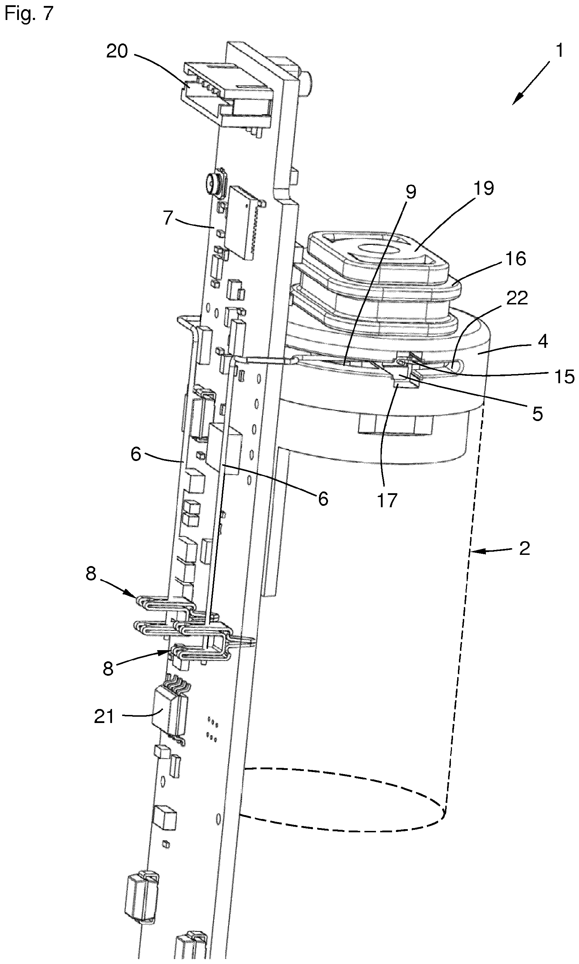

Fig. 7 zeigt eine Teildarstellung eines Antriebs 1 mit angedeutetem Elektromotor 2 (Strichlinie), dem Lagerschild 4 und der Leiterplatte 7. Im Lagerschild 4 sind Bürsten 5 derart ausgerichtet und geführt, dass sie sich bei Abnutzung parallel zur Leiterplatte 7 bewegen. Dadurch können die Litzenleiter 6, rechtwinklig zur Leiterplatte auf diese zugeführt werden. Anschließend sind die Litzenleiter 6 um eine Kante der Leiterplatte 7 herumgelegt und zu den Anschlusskontakten 8 geführt. Die schlitzartige Durchführung 9 ist zur Aufnahme eines Schenkels der Bürstenandruckfeder 15 erweitert. Zur einfacheren Montage der Bürsten 5 kann der Schenkel der Bürstenandruckfeder 15 im Lagerschild gespannt und formschlüssig in dieser Lage gehalten werden, bis die Bürste eingeführt ist (nicht dargestellt). Die Leiterplatte 7 trägt Bauteile einer elektrischen Steuerschaltung für das Rollo und einen Anschlussstecker 20. Weiter ist das Dämpfungselement 16 dargestellt, das an dem Ansatz des Lagerschilds 4 aufgenommen ist.

### Bezugszeichenliste

- 1: Antrieb
- 2: Kommutatormotor
- 3: Motorgehäuse
- 4: Lagerschild
- 5: Bürste
- 6: Litzenleiter
- 7: Leiterplatte
- 8: Anschlusskontakt
- 9: Durchführung
- 10: Motorgehäuse
- 11: Anschlussfahne
- 12: Schneidklemmabschnitt
- 13: Motoranschlussleitung
- 14: Einpressabschnitt
- 15: Bürstenandruckfeder
- 16: Dämpfungselement
- 17: Bürstenschacht
- 18: Verdrehsicherung
- 19: Ansatz
- 20: Anschlussstecker
- 21: Bauteil
- 22: Federaufnahmetasche

## Patentansprüche

1. Antrieb (1) mit einem Kommutatormotor (2), mit einem Motorgehäuse (3), einem Lagerschild (4), Bürsten (5), welche über Litzenleiter (6) an eine Spannungsquelle anschließbar sind, **dadurch gekennzeichnet, dass** zumindest ein Litzenleiter (6) eine unmittelbare elektrische Verbindung zwischen einer Bürste (5) und einem außerhalb des Motorgehäuses (3) angeordneten Anschlusskontakt (8) bildet.

2. Antrieb nach Anspruch 1, **dadurch gekennzeichnet, dass** der Anschlusskontakt auf einer Leiterplatte (7) angeordnet oder durch eine Leiterbahn der Leiterplatte (7) gebildet ist.

3. Antrieb nach Anspruch 1 oder 2, **dadurch gekennzeichnet, dass** zumindest zwei Bürsten (5) über jeweils einen Litzenleiter (6) unmittelbar mit der Leiterplatte (7) oder einem Anschlusskontakt (8) auf der Leiterplatte (7) elektrisch verbunden sind.

4. Antrieb nach Anspruch 1, 2 oder 3, **dadurch gekennzeichnet, dass** die Bürste (5) eine Kohlebürste ist und der Litzenleiter (6) in der Bürste (5) eingebettet ist.

5. Antrieb nach Anspruch 1, 2, 3 oder 4, **dadurch gekennzeichnet, dass** der Anschlusskontakt (8) ein Schneidklemmkontakt ist.

6. Antrieb nach Anspruch 1, 2, 3, 4 oder 5, **dadurch gekennzeichnet, dass** der Anschlusskontakt (8) einen Einpresskontaktabschnitt aufweist, welcher in einer Bohrung der Leiterplatte eingepresst ist.

7. Antrieb nach Anspruch 3 oder 4, **dadurch gekennzeichnet, dass** zumindest ein Litzenleiter (6) direkt mit der Leiterplatte (7) verschweißt ist.

8. Antrieb nach Anspruch 3, 4 oder 6, **dadurch gekennzeichnet, dass** zumindest ein Litzenleiter (6) durch eine Crimpverbindung mit der Leiterplatte (7) kontaktiert ist, wobei der Litzenleiter mit dem Anschlusskontakt vercrimpt ist.

9. Antrieb nach Anspruch 3 oder 4, **dadurch gekennzeichnet, dass** der Anschlusskontakt ein Microquadlock-Stecker ist, der mit dem Litzenleiter (6) vercrimpt oder verschweißt ist.

10. Antrieb nach zumindest einem der Ansprüche 1 bis 9, **dadurch gekennzeichnet, dass** der Lagerschild (4) eine Durchführung (9) für einen Litzenleiter (6) aufweist, welche axial, diagonal oder radial ausgerichtet ist.

11. Antrieb nach Anspruch 10, **dadurch gekennzeichnet, dass** der Lagerschild (4) aus einem elektrisch isolierendem Material, insbesondere einem Kunststoffmaterial besteht.

12. Antrieb nach Anspruch 11, **dadurch gekennzeichnet, dass** die Bürsten von außen radial montierbar sind.

13. Antrieb nach Anspruch 10, 11 oder 12, **dadurch gekennzeichnet, dass** die Durchführung (9) schlitzartig ausgebildet ist.

14. Antrieb nach Anspruch 10, 11, 12 oder 13, **dadurch gekennzeichnet, dass** der Lagerschild (4) zusätzlich die Funktion einer Bürstentragplatte hat.

15. Antrieb nach Anspruch 14, **dadurch gekennzeichnet, dass** sich die Durchführung (9) bis zu einem Bürstenschacht (17) zur Aufnahme und Führung der Bürste (5) erstreckt.

16. Antrieb nach Anspruch 15, **dadurch gekennzeichnet, dass** sich die Durchführung (9) auf der gegenüberliegenden Seite des Bürstenschachts (17) als Federaufnahmetasche (22) fortsetzt.

17. Antrieb nach zumindest einem der Ansprüche 2 bis 16, **dadurch gekennzeichnet, dass** die Leiterplatte (7) parallel zu einer Motorachse angeordnet ist.

18. Antrieb nach Anspruch 17, **dadurch gekennzeichnet, dass** die Bürsten parallel zur Leiterplatte (7) ausgerichtet und geführt sind und sich bei Abnutzung parallel zur Leiterplatte (7) bewegen.

19. Antrieb nach zumindest einem der Ansprüche 2 bis 18, **dadurch gekennzeichnet, dass** der Litzenleiter (6) um eine Kante der Leiterplatte herumgeführt ist.

20. Antrieb nach zumindest einem der vorangehenden Ansprüche, **dadurch gekennzeichnet, dass** er als Rollo- oder Jalousieantrieb dient.
